# EUROPEAN PATENT SPECIFICATION

(11) **EP 2 372 602 B1**
(45) Date of publication and mention of the grant of the patent: **19.07.2017**
(21) Application number: 11153181.0
(22) Date of filing: 03.02.2011
(51) Int. Cl.: G06K 7/08, G11B 5/00

(54) **Data writing device and card processing apparatus provided therewith**
Datenschreibvorrichtung und Kartenverarbeitungsvorrichtung damit
Dispositif d'écriture de données et appareil de traitement de cartes fourni avec celui-ci

(30) Priority: 31.03.2010 JP 2010081640
(43) Date of publication of application: 05.10.2011
(73) Proprietor: Hitachi-Omron Terminal Solutions, Corp., Tokyo 141-8576 (JP)
(72) Inventor: Tadamasa, Akihiro, Chiyoda-ku, Tokyo 100-8220 (JP)
(74) Representative: MERH-IP Matias Erny Reichl Hoffmann Patentanwälte PartG mbB

(56) References cited:
- EP-A2- 1 353 290
- WO-A1-94/18671
- JP-A- 6 314 404

## Description

### Technical Field

The present invention relates to a data writing device having a writing part that writes data into a magnetic card and a card processing apparatus provided therewith.

### Background Art

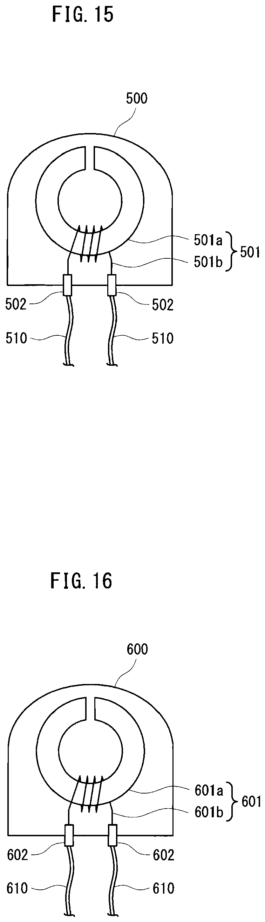

There is conventionally known a card processing apparatus provided with a magnetic head (reading head) 500 as shown in Fig. 15. The magnetic head 500 includes a reading part 501 that reads data recorded on a magnetic card and a pair of output terminals (reading terminals) 502 that outputs a signal read by the reading part 501. The reading part 501 has a core 501a and a coil 501b. A pair of cables 510 is connected to each output terminal 502.

In such magnetic head 500, information read by the reading part 501 may be illegally acquired when cables other than the cables 510 are connected to the output terminals 502. Further, the information read by the reading part 501 may also be illegally acquired when the cables 510 are clamped. As a result, the data recorded on the magnetic card may be illegally acquired.

In view of the above, various card processing apparatus to prevent the data recorded on the magnetic card from being illegally acquired have been proposed (see Patent Literatures 1 and 2, for example).

Patent Literature 1 discloses a card processing apparatus provided with a magnetic head having a reading part that reads magnetic data recorded on a magnetic card, a decoding circuit that decodes a signal read by the reading part, and an encryption circuit that encrypts a data decoded by the decoding circuit. In this card processing apparatus, since the data outputted from the magnetic head is encrypted, the data recorded on the magnetic card can be prevented from being illegally acquired even if the output data from the magnetic head has been illegally acquired. Such magnetic head has already been realized as a product.

Patent Literature 2 discloses a card processing apparatus provided with a magnetic head that reads magnetic data recorded on a magnetic card, a decoding circuit that decodes a signal outputted from the magnetic head, and an encryption circuit that encrypts a data decoded by the decoding circuit. In this card processing apparatus, since an area from an output part of the magnetic head to an input part of the encryption circuit through the decoding circuit is molded by resin, the magnetic data recorded on the magnetic card can be prevented from being illegally acquired.

However, the Patent Literatures 1 and 2 neither disclose nor suggest a configuration for preventing the magnetic data recorded on the magnetic card from being illegally acquired at a magnetic head for writing data.

There is also conventionally known a card processing apparatus provided with a magnetic head (writing head) 600 as shown in Fig. 16. The magnetic head 600 includes a writing part 601 that writes magnetic data into a magnetic card and a pair of input terminals (writing terminals) 602 to which a writing signal is inputted. The writing part 601 has a core 601a and a coil 601b. A pair of signal lines 610 is connected to each input terminal 602.

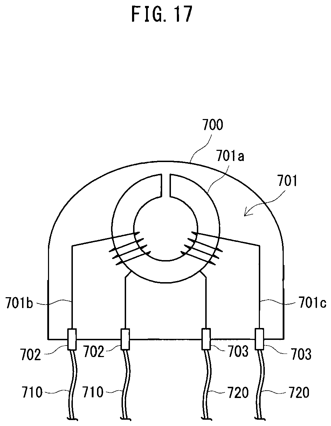

Furthermore, there is conventionally known a card processing apparatus provided with a magnetic head (reading/ writing combination head) 700 as shown in Fig. 17. The magnetic head 700 includes a reading/writing part 701 that reads data recorded on a magnetic card and writing data into the magnetic card, a pair of output terminals (reading terminals) 702 that outputs a signal read by the reading/writing part 701, and a pair of input terminals (writing terminals) 703 to which a writing signal is inputted.

The reading/writing part 701 has a core 701a, a coil 701b for reading data, and a coil 701c for writing data. A pair of cables 710 is connected to each output terminal 702 and a pair of signal lines 720 is connected to each input terminal 703.

### Citation List

### Patent Literature

Patent Literature 1: Japanese Laid-Open Patent Publication No. 2002-189987
Patent Literature 2: Japanese Laid-Open Patent Publication No. 2005-267031

### Summary of Invention

### Technical Problems

According to the magnetic head 600 shown in Fig. 16, when the magnetic card is conveyed while being contact with the magnetic head 600 at a time of non-writing, the data recorded on the magnetic card is read by the writing part 601 and the read data appears at the input terminals (writing terminals) 602.

Therefore, in the conventional magnetic head 600, the data recorded on the magnetic card may be illegally acquired when other cables are connected to the input terminals 602 or the signal lines 610 are clamped.

Similarly, in the magnetic head 700 shown in Fig. 17, when reading the magnetic card, a signal read by the reading/writing part 701 is outputted from the output terminals (reading terminals) 702, and this signal also appears at the input terminals (writing terminals) 703.

Therefore, in the conventional reading/ writing magnetic head 700, the data recorded on the magnetic card may be illegally acquired when other cables are connected to the input terminals 703 or the signal lines 720 are clamped.

JP 6 314 404 A describes a magnetic head with a read magnetic circuit, a write magnetic circuit, and analog switches for opening and closing connections between the magnetic circuits and head terminals.

EP 1353 290 A describes a magnetic head of a magnetic card reader comprising a core with a coil for sensing, as analogue signals, the data stored on the card, an A/D converter chip, and a microprocessor.

WO 94/18671 A describes a read/write head comprising a plurality of inductively wound read/write gaped cores and a shield situated between the cores such that a non-magnetic space is formed between the shield and each adjacent core.

In order to solve the above problems, it is an object of the present invention to provide a data writing device and a card processing apparatus capable of preventing data recorded on a magnetic card from being illegally acquired even when there are performed such illegal acts of connecting a cable to an input part to which a writing signal is inputted or clamping a signal line connected to the input part.

### Solution to Problems

The object is solved by the invention according to claims 1 and 3. Further preferred developments are described by the dependent claims.

A data writing device of the present invention comprises a writing part that writes data into a magnetic card, a first input part to which a writing signal to be supplied to the writing part is inputted, and a switching part that switches whether or not to connect the writing part to the first input part electrically. The writing signal is a signal corresponding to data to be written into the magnetic card by the writing part.

According to such a configuration, even when the data recorded on the magnetic card is read by the writing part, the read signal does not appear at the first input part by disconnecting the writing part from the first input part electrically. Thus, the data recorded on the magnetic card can be prevented from being illegally acquired even when there are performed illegal acts of connecting a cable to the first input part or clamping a signal line connected to the first input part.

The above-described data writing device may further include a reading part that reads data recorded on the magnetic card, an encryption circuit that encrypts the data read by the reading part, and/or an output part that outputs the data encrypted by the encryption circuit.

The above-described data writing device may further include a second input part to which a control signal that controls the switching part is inputted.

The above-described data writing device may further include a determining means that determines whether writing to the magnetic card by the writing part is performed or not, and/or the switching part may connect the writing part to the first input part electrically only when the determining means determines that writing to the magnetic card is performed.

A card processing apparatus of the present invention comprises a slot to which a magnetic card is inserted, a conveyance means that conveys the magnetic card inserted to the slot, and a data writing device that writes data into the magnetic card being conveyed by the conveyance means. The data writing device includes a writing part that writes data into a magnetic card being conveyed by the conveyance means, a first input part to which a writing signal to be supplied to the writing part is inputted, and a switching part that switches whether or not to connect the writing part to the first input part electrically.

The above-described card processing apparatus may further include a reading part that reads data recorded on the magnetic card being conveyed by the conveyance means, an encryption circuit that encrypts the data read by the reading part, and/or an output part that outputs the data encrypted by the encryption circuit.

The above-described card processing apparatus may further comprise a control unit that controls the switching part of the data writing device. The data writing device may further include a second input part to which a control signal is inputted from the control unit. The control unit may output to the second input part the control signal that controls the switching part so as to disconnect the writing part from the first input part electrically when the data is not written into the magnetic card by the writing part (at a time of non-writing process), and/or may output to the second input part the control signal that controls the switching part so as to connect the writing part to the first input part electrically when the data is written into the magnetic card by the writing part (at a time of writing process).

In the above-described card processing apparatus, the data writing device may further include a determining means that determines whether writing to the magnetic card by the writing part is performed or not. The switching part may connect the writing part to the first input part electrically only when the determining means determines that writing to the magnetic card is performed.

### Advantageous Effects of Invention

According to the present invention, there can be provided a data writing device and a card processing apparatus capable of preventing data recorded on a magnetic card from being illegally acquired even when there are performed illegal acts of connecting a cable to an input part to which a writing signal is inputted or clamping a signal line connected to the input part.

### Brief Description of Drawings

Fig. 1 is a block diagram showing a configuration of a card processing apparatus according to a first embodiment of the present invention and an ATM;
Fig. 2 is a side view showing an outline of the card processing apparatus of Fig. 1;
Fig. 3 is a view describing a magnetic head in the card processing apparatus of Fig. 2;
Fig. 4 is a perspective view showing a structure of a reading/writing part in the magnetic head of Fig. 3;
Fig. 5 is a view describing a positional relationship between the reading/writing part in the magnetic head of Fig. 3 and a magnetic stripe of a magnetic card;
Fig. 6 is a block diagram showing a configuration of the card processing apparatus of Fig. 2;
Fig. 7 is a flowchart describing the operations of the card processing apparatus according to the first embodiment;
Fig. 8 is a flowchart describing a writing process of the card processing apparatus according to the first embodiment;
Fig. 9 is a side view describing the operations of the card processing apparatus according to the first embodiment;
Fig. 10 is a side view describing the operations of the card processing apparatus according to the first embodiment;
Fig. 11 is a side view describing the operations of the card processing apparatus according to the first embodiment;
Fig. 12 is a side view showing an outline of the card processing apparatus according to a second embodiment of the present invention;
Fig. 13 is a view describing a magnetic head in the card processing apparatus of Fig. 12;
Fig. 14 is a flowchart describing a writing process of the card processing apparatus according to the second embodiment;
Fig. 15 is a view describing a conventional magnetic head (reading head);
Fig. 16 is a view describing a conventional magnetic head (writing head); and
Fig. 17 is a view describing a conventional magnetic head (reading/writing combination head).

### Description of Embodiments

Hereinafter, first and second embodiments of the present invention will be described with reference to the drawings.

### <First Embodiment>

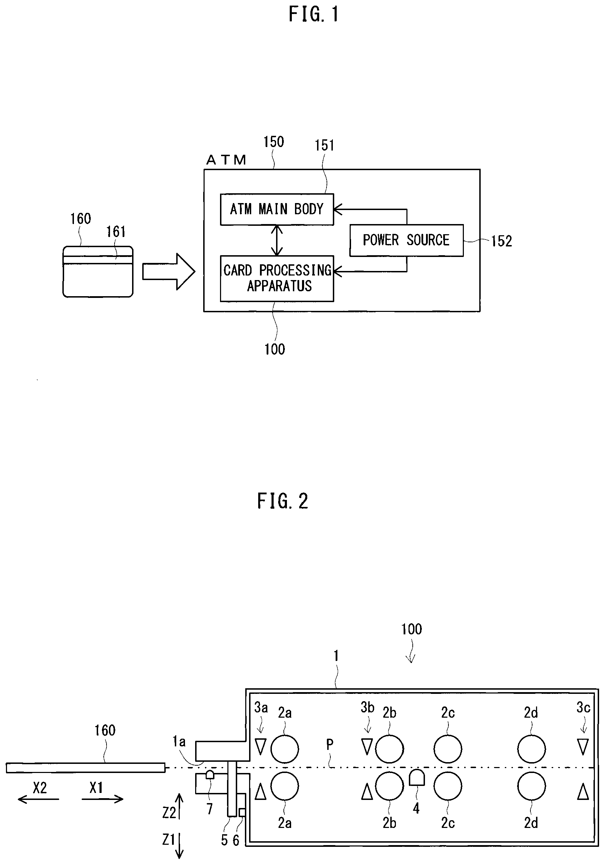

Referring to Figs. 1 to 6, configurations of a card processing apparatus 100 according to the first embodiment of the present invention and an ATM (Automated Teller Machine) 150 will be described.

As shown in Fig. 1, the ATM 150 has an ATM main body 151, a power source 152, and the card processing apparatus 100. The ATM 150 is placed in a financial institution or the like so that a user makes a transaction such as withdrawal of cash.

The card processing apparatus 100 according to the first embodiment is mounted in the ATM 150. Electric power is supplied to the card processing apparatus 100 from the power source 152. The card processing apparatus 100 performs a predetermined process on a magnetic stripe 161 of a magnetic card 160 inserted by the user.

Specifically, the card processing apparatus 100 reads magnetic data recorded on the magnetic stripe 161 of the magnetic card 160 and transmits the read data to the ATM main body 151. The card processing apparatus 100 also receives data transmitted from the ATM main body 151 and writes the received data into the magnetic stripe 161 of the magnetic card 160.

In the magnetic stripe 161, three tracks are arranged. The magnetic data is recorded on each track in accordance with, for example, the F2F (Two Frequency Coherent Phase Encoding) system.

As shown in Fig. 2, the card processing apparatus 100 includes a housing 1, conveyance rollers 2a to 2d, card position detectors 3a to 3c, a magnetic head (reading/writing combination head) 4, a shutter member 5, a shutter position detector 6 and a card insertion detector 7. The conveyance rollers 2a to 2d are an example of a "conveyance means" in the present invention. The magnetic head 4 is an example of a "data writing device" in the present invention.

The housing 1 has, at its end on an arrow X2 side, a slot 1a into which the magnetic card 160 is inserted. Pairs of upper and lower conveyance rollers 2a to 2d are provided so that they sandwich a conveyance path P. The conveyance rollers 2a to 2d convey the magnetic card 160 in an insertion direction (the direction of an arrow X1) and an ejection direction (the direction of the arrow X2). The card position detectors 3a to 3c are, for example, photo-interrupters, each of which detects a position of the magnetic card 160 on a conveyance path P.

The magnetic head 4 reads/writes data from/into the magnetic card 160 inserted. The magnetic head 4 is arranged to be movable in the direction of the arrow Z1 and in the direction of the arrow Z2. Specifically, the magnetic head 4 is projected into the conveyance path P, and recedes in the direction of the arrow Z1 while being in contact with the magnetic stripe 161 (see Fig. 1) of the magnetic card 160 when the magnetic card 160 passes along the conveyance path P.

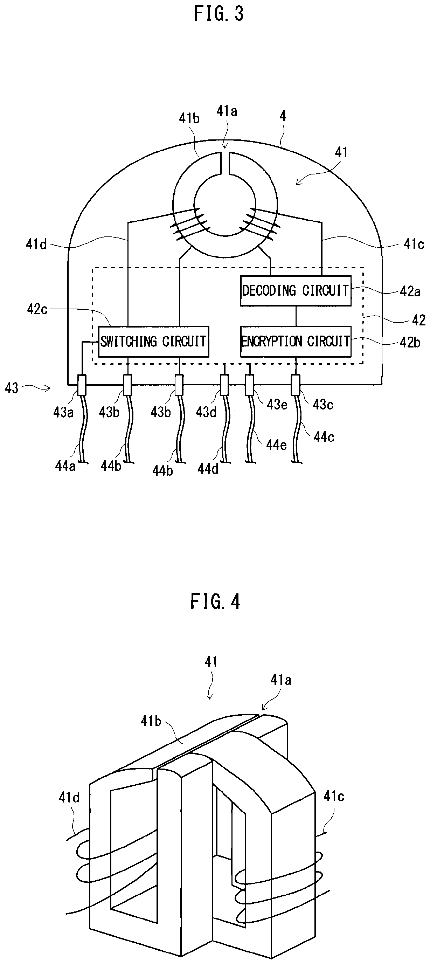

As shown in Fig. 3, the magnetic head 4 has a reading/writing part 41, a circuit part 42, and a terminal part 43. The reading/writing part 41 is an example of a "writing part" and an example of a "reading part" in the present invention.

The reading/writing part 41 reads data recorded on the magnetic card 160 and also writes data into the magnetic card 160. This reading/writing part 41 includes a core 41b provided with a gap 41a, a reading coil 41c and a writing coil 41d as shown in Fig. 4. The core 41b is so formed that a width of a winding portion for the reading coil 41c is smaller than a width of a winding portion for the writing coil 41d. With this configuration, accuracy in reading of the data written into the magnetic card 160 can be enhanced.

In the reading/writing part 41, at a time of reading, the core 41b is magnetized by the magnetization pattern of the magnetic card 160 being conveyed so that a current flows through the coil 41c. The reading/writing part 41 thereby outputs a reproduction signal to a decoding circuit 42a described below (see Fig. 3).

In the reading/writing part 41, at a time of writing, a current flows through the coil 41d in accordance with a writing signal inputted from a switching circuit 42c described below (see Fig. 3) . Thus the core 41b is magnetized whereby the magnetic stripe 161 (see Fig. 1) of the magnetic card 160 being conveyed is magnetized.

As shown in Fig. 3, the circuit part 42 includes the decoding circuit 42a, an encryption circuit 42b and the switching circuit 42c. The switching circuit 42c is an example of a "switching part" in the present invention.

The decoding circuit 42a determines the presence of a detection pulse for every predetermined cycle to decode the reproduction signal inputted from the reading/writing part 41 to binary data. The encryption circuit 42b encrypts data decoded by the decoding circuit 42a. This encryption system may be, for example, a secret key encryption system or a public key encryption system.

A control signal is inputted to the switching circuit 42c through an input terminal 43a described below. The switching circuit 42c having a switch element switches whether or not to connect the writing coil 41d of the reading/writing part 41 to input terminals 43b described below electrically in accordance with the inputted control signal. For example, the switching circuit 42c connects the writing coil 41d to the input terminals 43b electrically when the control signal of H (High) level is inputted thereto, whereas the switching circuit 42c disconnects the writing coil 41d from the input terminals 43b electrically when the control signal of L (Low) level is inputted thereto.

The terminal part 43 includes the input terminal 43a to which the control signal is inputted, a pair of input terminals (writing terminals) 43b to which the writing signal to be supplied to the reading/writing part 41 is inputted, an output terminal 43c that outputs data encrypted by the encryption circuit 42b, a power supply terminal 43d and a ground terminal 43e connected to the circuit part 42. The input terminals 43a and 43b are, respectively, an example of a "second input part" and a "first input part" in the present invention. The output terminal 43c is an example of an "output part" in the present invention.

The input terminals 43a and 43b are connected to the switching circuit 42c. The output terminal 43c is connected to the encryption circuit 42b. The ground terminal 43e is connected to ground through a cable 44e.

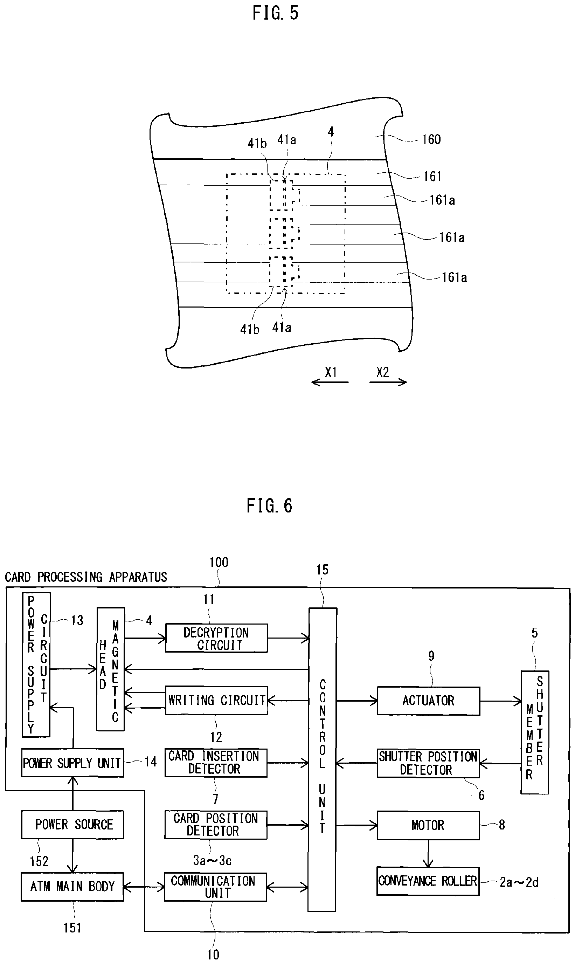

As shown in Fig. 5, the magnetic head 4 is so arranged that a direction in which the track 161a of the magnetic stripe 161 of the magnetic card 160 being conveyed extends (the direction of the arrow X1 and the direction of the arrow X2) is orthogonal to a direction in which the gap 41a of the core 41b extends. In Fig. 3, only one set of reading part 41, circuit part 42, input terminals 43a and 43b, and output terminal 43c is shown for simplification. However, actually, three sets of reading part 41, circuit part 42, input terminals 43a and 43b, and output terminal 43c are provided so as to correspond to each track 161a of the magnetic stripe 161.

As shown in Fig. 2, the shutter member 5 is arranged to be movable in an opening direction (the direction of an arrow Z1) and a closing direction (the direction of an arrow Z2) to open and close the slot 1a. The shutter position detector 6 is, for example, a microswitch, and detects the movement of the shutter member 5 to the closing position. The card insertion detector 7 is, for example, a magnetic head, and detects the insertion of the magnetic card 160 to the slot 1a.

In the card processing apparatus 100, as shown in Fig. 6, a motor 8 for driving the conveyance rollers 2a to 2d, an actuator 9 such as solenoid for moving the shutter member 5, a communication unit 10 for transmitting/receiving data to/from the ATM main body 151 are provided.

The card processing apparatus 100 further includes a decryption circuit 11, a writing circuit 12, a circuit power supply 13, a power supply unit 14 and a control unit 15.

The decryption circuit 11 is connected to the output terminal 43c (see Fig. 3) of the magnetic head 4 through the cable 44c (see Fig. 3) . Hence, data encrypted by the encryption circuit 42b (see Fig. 3) is inputted to the decryption circuit 11. The decryption circuit 11 decrypts the encrypted data inputted from the encryption circuit 42b and outputs the decrypted data to the control unit 15.

The writing circuit 12 is connected to the input terminal 43b (see Fig. 3) of the magnetic head 4 through the cable (signal line) 44b (see Fig. 3) . This writing circuit 12 produces a writing signal and outputs it to the input terminal 43b. The writing signal is a signal corresponding to data to be written into the magnetic card 160 by the reading/writing part 41.

The circuit power supply 13 is connected to the power supply terminal 43d (see Fig. 3) of the magnetic head 4 through the cable 44d (see Fig. 3). Electric power is fed to the circuit power supply 13 from the power supply unit 14. The circuit power supply 13 supplies electric power to the circuit part 42 through the cable 44d and the power supply terminal 43d.

The power source 152 of the ATM 150 (see Fig. 1) supplies electric power to the power supply unit 14. Although not shown in Fig. 6 for simplification, the power supply unit 14 also supplies electric power to each part (e.g. the control unit 15) of the card processing apparatus 100.

The control unit 15 includes a CPU, a ROM, a RAM, and the like. The control unit 15 is connected to the input terminal 43a (see Fig. 3) of the magnetic head 4 through the cable 44a (see Fig. 3). The control unit 15 outputs the control signal of H level to the input terminal 43a when writing to the magnetic card 160 is performed, whereas the control unit 15 outputs the control signal of L level to the input terminal 43a when writing to the magnetic card 160 is not performed

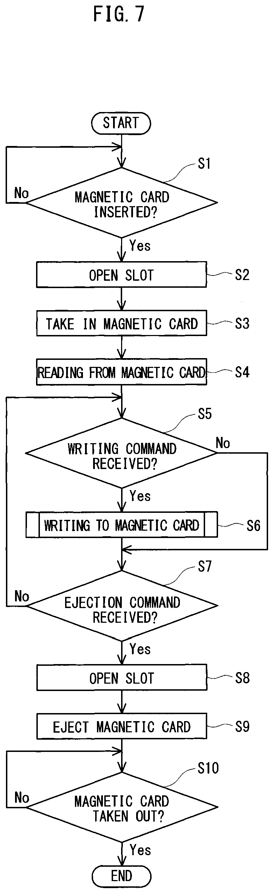

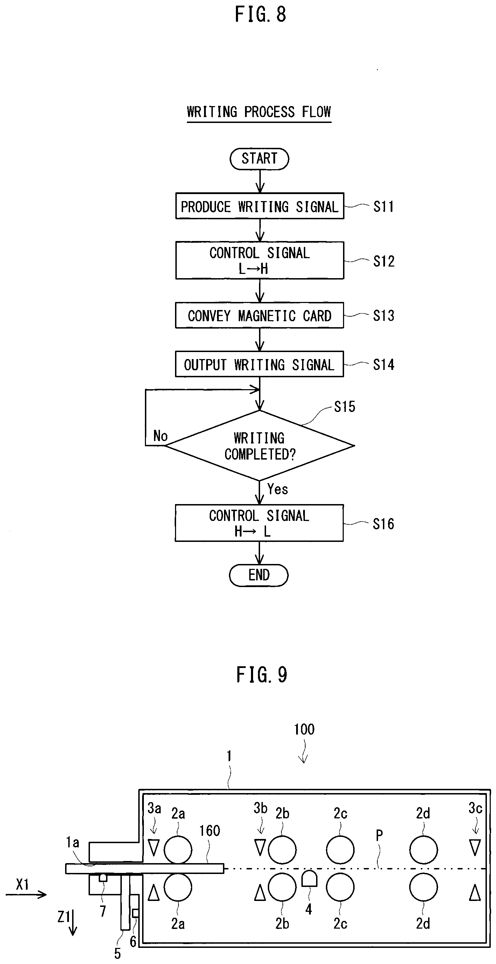

Referring to Figs. 2 to 11, the operations of the card processing apparatus 100 according to the first embodiment of the present invention will be described. Each step in a flow chart of Fig. 7 and Fig. 8 is executed by the control unit 15 (see Fig. 6). Before insertion of the magnetic card 160, the control unit 15 outputs the control signal of L level to the input terminal 43a (see Fig. 3) . Therefore, the switching circuit 42c (see Fig. 3) disconnects the writing coil 41d (see Fig. 3) from the input terminals 43b (see Fig. 3) electrically.

In the card processing apparatus 100, in step S1 of Fig. 7, it is determined whether or not the magnetic card 160 (see Fig. 2) is inserted to the slot 1a (see Fig. 2) of the housing 1 based on a detection result of the card insertion detector 7 (see Fig. 2). If determined that the magnetic card 160 is not inserted to the slot 1a, step S1 is repeatedly performed. In other words, the card processing apparatus 100 waits until the magnetic card 160 is inserted thereto. When determined that the magnetic card 160 is inserted to the slot 1a, the process proceeds to step S2.

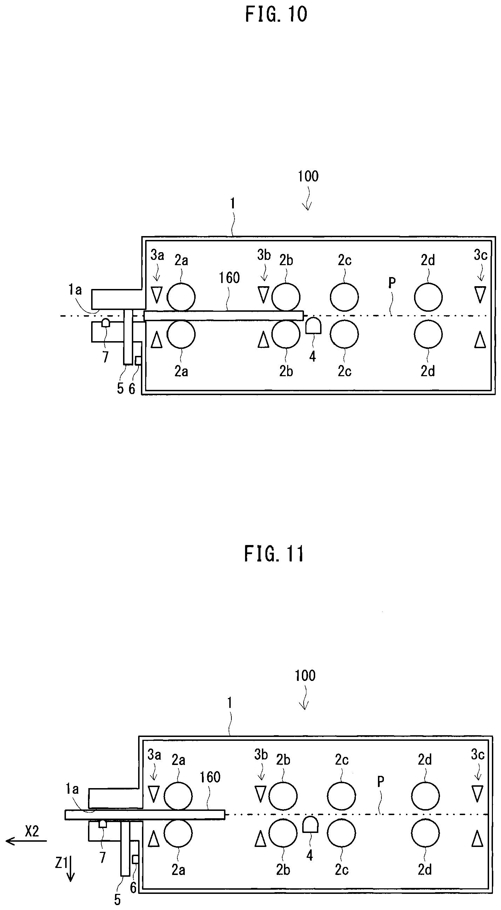

In step S2, the shutter member 5 (see Fig. 2) is moved in the opening direction (the direction of the arrow Z1) by the actuator 9 (see Fig. 6). The shutter member 5 thereby recedes from the conveyance path P so that the slot 1a is opened, as shown in Fig. 9. In step S3, the conveyance rollers 2a to 2d (see Fig. 9) are forward rotated by driving the motor 8 (see Fig. 6). The magnetic card 160 is thereby conveyed in the direction of the arrow X1, and taken into the housing 1, as shown in Fig. 10. The slot 1a is to be closed by the shutter member 5 after the elapse of a predetermined time from the opening thereof.

In step S4, reading of the data recorded on the magnetic card 160 taken into the housing 1 is carried out by the magnetic head 4 (see Fig. 10). Specifically, the reading/writing part 41 (see Fig. 3) of the magnetic head 4 outputs the reproduction signal to the decoding circuit 42a (see Fig. 3) in the process of conveying the magnetic card 160. The decoding circuit 42a decodes the reproduction signal to binary data and outputs the decoded data to the encryption circuit 42b (see Fig. 3).

The encryption circuit 42b encrypts the data decoded by the decoding circuit 42a. The encrypted data is outputted to the decryption circuit 11 (see Fig. 6) from the output terminal 43c through the cable 44c (see Fig. 3). The decryption circuit 11 decrypts the encrypted data and output the decrypted data to the control unit 15. The control unit 15 transmits the data read from the magnetic card 160 to the ATM main body 151 (see Fig. 6) through the communication unit 10 (see Fig. 6).

When reading the data recorded on the magnetic card 160, since the control unit 15 outputs the control signal of L level to the input terminal 43a, the switching circuit 42c disconnects the writing coil 41d from the input terminals 43b electrically. Therefore, the reproduction signal read by the reading/writing part 41 does not appear at the input terminals 43b and the cables 44b.

In step S5, it is determined whether or not a writing command is received by the communication unit 10 from the ATM main body 151. If determined that the writing command is received, the process proceeds to step S6. If determined that the writing command is not received, the process proceeds to step S7.

In step S6, writing of data to the magnetic card 160 taken into the housing 1 is carried out by the magnetic head 4.

Specifically, in step 11 of Fig. 8, the writing circuit 12 (see Fig. 6) produces the writing signal in accordance with the writing command received. Then in step S12, the control signal to be outputted to the input terminal 43a of the magnetic head 4 is switched from L level to H level by the control unit 15. The switching circuit 42c thereby connects the writing coil 41d to the input terminals 43b electrically.

In step 13, the conveyance rollers 2a to 2d are rotated by driving the motor 8. The magnetic card 160 is thereby conveyed. Then in step 14, the writing circuit 12 outputs the writing signal to the input terminals 43b of the magnetic head 4 through the cables 44b.

Since the writing coil 41d and the input terminals 43b are electrically connected, the writing signal inputted to the input terminals 43b is supplied to the coil 41d of the reading/writing part 41. Under this condition, in the reading/writing part 41, the current flows through the coil 41d in accordance with the writing signal. The core 41b is thereby magnetized and the magnetic stripe 161 (seeFig. 5) of the magnetic card 160 being conveyed is magnetized. Thus, writing of data to the magnetic card 160 is carried out.

In step S15, the control unit 15 determines whether or not the writing of data to the magnetic card 160 is completed based on, for example, the number of steps of the motor 8. This determination may be based on whether or not the writing signal is being outputted from the writing circuit 12. Alternatively, the determination may be based on a detection result of the card position detectors 3a to 3c (see Fig. 2).

If determined that writing to the magnetic card 160 is not completed, step S15 is repeatedly performed. When determined that writing to the magnetic card 160 is completed, the process proceeds to step S16.

In step S16, the control signal to be outputted to the input terminal 43a is switched from H level to L level by the control unit 15. The switching circuit 42c thereby disconnects the writing coil 41d from the input terminals 43b electrically. Thus the data writing process to the magnetic card 160 is terminated.

Thereafter, in step S7 of Fig. 7, it is determined whether or not an ejection command for ejecting the magnetic card 160 is received by the communication unit 10 from the ATM main body 151. If determined that the ejection command is received, the process proceeds to step S8. If determined that the ejection command is not received, the process returns to step S5.

In step S8, the shutter member 5 is moved in the direction of the arrow Z1 by the actuator 9. The shutter member 5 thereby recedes from the conveyance path P so that the slot 1a is opened, as shown in Fig. 11. Then, in step S9, the conveyance rollers 2a to 2d are reverse rotated by driving the motor 8. The magnetic card 160 is thereby conveyed in the direction of the arrow X2 and ejected from the slot 1a.

In step S10, it is determined whether or not the magnetic card 160 is taken out from the slot 1a based on a detection result of the card insertion detector 7. If determined that the magnetic card 160 is not taken out, step S10 is repeatedly performed. In other words, the card processing apparatus 100 waits until the magnetic card 160 is taken out therefrom. When determined that the magnetic card 160 is taken out, the slot 1a is closed by the shutter member 5 and a series of operations is terminated.

In the first embodiment, as described above, the switching circuit 42c that switches whether or not to connect the writing coil 41d of the reading/writing part 41 to the input terminals 43b electrically is provided in the magnetic head 4. The switching circuit 42c connects the writing coil 41d to the input terminals 43b electrically only when writing to the magnetic card is performed. According to such a configuration, the reproduction signal does not appear at the input terminals 43b and the cables 44b when the data recorded on the magnetic card 160 is read by the reading/writing part 41. Thus, the data recorded on the magnetic card 160 can be prevented from being illegally acquired even when there are performed illegal acts of connecting cables to the input terminals 43b or clamping the cables (signal lines) 44b connected to the input terminals 43b.

Additionally, in the first embodiment, the switching circuit 42c switches whether or not to connect the writing coil 41d to the input terminals 43b electrically in accordance with the control signal outputted from the control unit 15. Hence, it is easy to realize the operation in which the coil 41d is electrically connected to the input terminals 43b only when writing to the magnetic card 160 is performed.

Furthermore, in the first embodiment, the encryption circuit 42b is provided in the magnetic head 4. Therefore, even when there are performed illegal acts of connecting a cable to the output terminal 43c or clamping the cable 44c connected to the output terminal 43c, the data recorded on the magnetic card 160 can be prevented from being illegally acquired since the data outputted from the output terminal 43c is encrypted.

### <Second Embodiment>

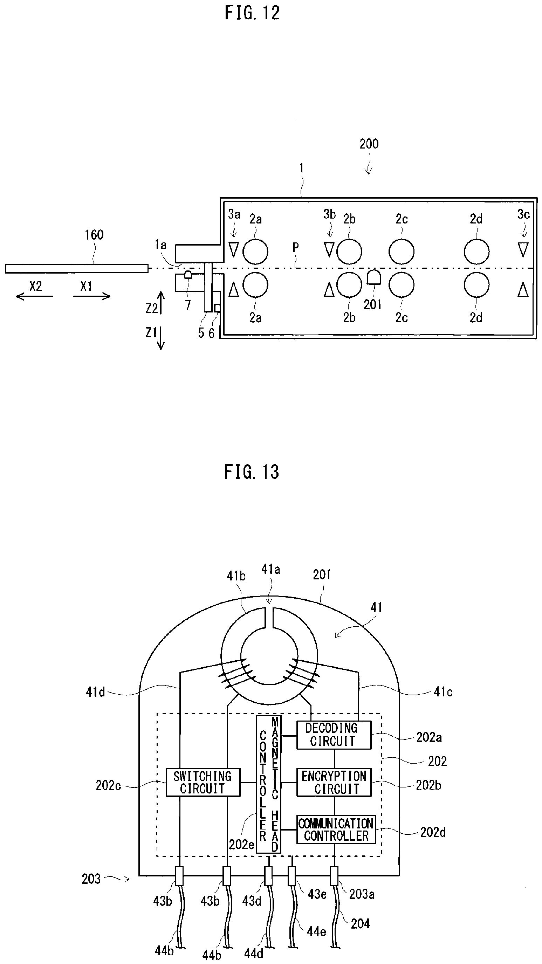

Referring to Figs. 12 and 13, configurations of a card processing apparatus 200 according to the second embodiment of the present invention will be described.

As shown in Fig. 12, the card processing apparatus 200 according to the second embodiment has a magnetic head 201. Since other configurations in the card processing apparatus 200 are similar to the card processing apparatus 100 (see Fig. 2 and Fig. 6), the description thereof will not be repeated. The magnetic head 201 is an example of a "data writing device" in the present invention.

As shown in Fig. 13, the magnetic head 201 has a reading/writing part 41, a circuit part 202, and a terminal part 203. Since the reading/writing part 41 is similar to that of the first embodiment described above, the description thereof will not be repeated.

The circuit part 202 includes a decoding circuit 202a, an encryption circuit 202b, a switching circuit 202c, a communication controller 202d, and a magnetic head controller 202e. The switching circuit 202c is an example of a "switching part" in the present invention. The magnetic head controller 202e is an example of a "determining means" in the present invention.

The decoding circuit 202a determines the presence of a detection pulse for every predetermined cycle to decode the reproduction signal inputted from the reading/writing part 41 to binary data. The encryption circuit 202b encrypts data decoded by the decoding circuit 202a. This encryption system may be, for example, a secret key encryption system or a public key encryption system.

The switching circuit 202c having a switch element switches whether or not to connect the writing coil 41d of the reading/writing part 41 to the input terminals 43b electrically. For example, the switching circuit 202c connects the writing coil 41d to the input terminals 43b electrically only when the magnetic head controller 202e determines that writing to the magnetic card 160 is performed. The switching circuit 202c disconnects the writing coil 41d from the input terminals 43b electrically when the magnetic head controller 202e determines that writing to the magnetic card 160 is not performed.

In the second embodiment, "when writing to the magnetic card 160 is not performed" includes "when reading of the magnetic card 160 is performed" and "when conveying of the magnetic card 160 is performed".

The communication controller 202d controls data communication between the magnetic head 201 and the decryption circuit 11 and the control unit 15 (see Fig. 6). Specifically, the communication controller 202d outputs data encrypted by the encryption circuit 202b to the decryption circuit 11 from a communication terminal 203a described below. The communication controller 202d receives a notice of initiation of writing and a notice of termination of writing from the control unit 15 through the communication terminal 203a. The magnetic head controller 202e controls the operations of the magnetic head 201. During a period from notifying of the initiation of writing until notifying of the termination of writing, the magnetic head controller 202e determines that writing to the magnetic card 160 is performed. During a period other than the above period, the magnetic head controller 202e determines that writing to the magnetic card 160 is not performed.

The terminal part 203 includes a pair of input terminals (writing terminals) 43b to which the writing signal to be supplied to the reading/writing part 41 is inputted, the communication terminal 203a connected to the communication controller 202d, a power supply terminal 43d and a ground terminal 43e connected to the circuit part 202. The communication terminal 203a is an example of an "output part" in the present invention.

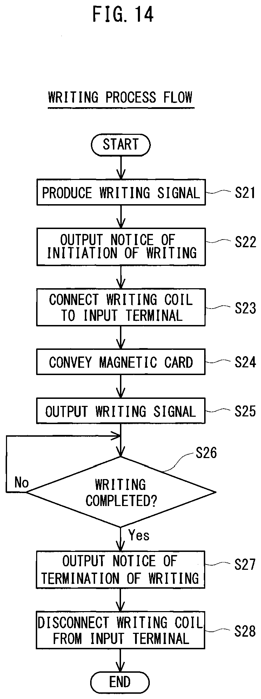

Referring to Figs. 1, 5, 6 and 12 to 14, the operations of the card processing apparatus 200 according to the second embodiment of the present invention will be described. Each step in a flow chart of Fig. 14 is executed by the control unit 15 (see Fig. 6). Since the operations of the card processing apparatus 200 except writing process (step S6 of Fig. 7) are similar to that of the first embodiment, the description thereof will not be repeated.

The writing process in the second embodiment is as follows. In step S21 of Fig. 14, the writing circuit 12 (see Fig. 6) produces a writing signal in accordance with a writing command received. In step S22, the control unit 15 outputs the notice of initiation of writing which indicates that writing to the magnetic card 160 is initiated to the magnetic head 201 (see Fig. 13). This notice of initiation of writing is inputted to the communication controller 202d (see Fig. 13) through a cable 204 and the communication terminal 203a.

In step S23, the magnetic head controller 202e of the magnetic head 201 determines that writing to the magnetic card 160 is initiated since the initiation of writing is notified. The switching circuit 202c (see Fig. 13) thereby connects the writing coil 41d to the input terminals 43b (see Fig. 13) electrically.

In step S24, the conveyance rollers 2a to 2d (see Fig. 6) are rotated by driving the motor 8 (see Fig. 6). The magnetic card 160 is thereby conveyed. Then in step 25, the writing circuit 12 outputs the writing signal to the input terminals 43b of the magnetic head 4 through the cables 44b.

Since the writing coil 41d and the input terminals 43b are electrically connected, the writing signal inputted to the input terminals 43b is supplied to the coil 41d of the reading/writing part 41. Under this condition, in the reading/writing part 41, a current flows through the coil 41d in accordance with the writing signal. The core 41b is thereby magnetized and the magnetic stripe 161 (seeFig. 5) of the magnetic card 160 being conveyed is magnetized. Thus, writing of data to the magnetic card 160 in carried out.

In step S26, the control unit 15 determines whether or not the writing of data to the magnetic card 160 is completed based on, for example, the number of steps of the motor 8. This determination may be based on whether or not the writing signal is being outputted from the writing circuit 12. Alternatively, the determination may be based on a detection result of the card position detectors 3a to 3c (see Fig. 2).

If determined that writing to the magnetic card 160 is not completed, step S26 is repeatedly performed. When determined that writing to the magnetic card 160 is completed, the process proceeds to step S27.

In step S27, the control unit 15 outputs the notice of termination of writing which indicates that writing to the magnetic card 160 is terminated to the magnetic head 201. This notice of termination of writing is inputted to the communication controller 202d through the cable 204 and the communication terminal 203a.

In step S28, the magnetic head controller 202e of the magnetic head 201 determines that writing to the magnetic card 160 is terminated since the termination of writing is notified. The switching circuit 202c thereby disconnects the writing coil 41d from the input terminals 43b electrically. Thus the data writing process to the magnetic card 160 is terminated.

In the second embodiment, as described above, the switching circuit 202c that switches whether or not to connect the writing coil 41d of the reading/writing part 41 to the input terminals 43b electrically is provided in the magnetic head 201. The switching circuit 202c connects the writing coil 41d to the input terminals 43b electrically only when writing to the magnetic card is performed. According to such a configuration, the reproduction signal does not appear at the input terminals 43b and the cables 44b when the data recorded on the magnetic card 160 is read by the reading/writing part 41. Thus, the data recorded on the magnetic card 160 can be prevented from being illegally acquired even when there are performed illegal acts of connecting cables to the input terminals 43b or clamping the cables (signal lines) 44b connected to the input terminals 43b.

Additionally, in the second embodiment, the switching circuit 202c switches whether or not to connect the writing coil 41d to the input terminals 43b electrically in accordance with determining by the magnetic head controller 202e whether writing to the magnetic card 160 is performed or not. Furthermore, the magnetic head controller 202e determines whether reading of the magnetic card 160 is performed or not, based on the notice of initiation of writing and the notice of termination of writing inputted to the communication terminal 203a. According to such a configuration, since the input terminal 43a (see Fig. 3) in the first embodiment to which the control signal is inputted is not required, the number of terminals can be reduced correspondingly.

Other advantageous effects of the second embodiment are similar to those of the first embodiment described above.

The present invention may adopt various embodiments other than the above-described embodiments. For example, in the first embodiment, there is shown the example in which the present invention is applied to the card processing apparatus 100 mounted in the ATM 150. However, the present invention is not limited to such a case and may be applied to a card processing apparatus mounted in other host device such as entry/exit management device. This is the same in the second embodiment.

In the first embodiment, there is shown that the reading/writing part 41 is provided in the magnetic head 4. In an example not in accordance with the invention as claimed, a reading part and a writing part may be separately provided in the magnetic head. In this case, the reading part may be another magnetic sensor such as a magneto-resistive element. This is the same in the second embodiment.

In the first embodiment, there is shown the example in which three reading/writing parts 41 are provided in the magnetic head 4 corresponding to three tracks 161a in the magnetic stripe 161 of the magnetic card 160. However, the present invention is not limited thereto. The number of reading/writing part 41 provided in the magnetic head 4 may be two or less, or may be four or more. This is the same in the second embodiment.

In the first embodiment, there is shown the example in which three output terminals 43c are provided corresponding to three reading/writing parts 41. However, the present invention is not limited thereto. Any number of output terminal 43c may be employed as long as the data read by three reading/writing parts 41 can be outputted therefrom. This is the same in the second embodiment.

In the first embodiment, there is shown the example in which the present invention is applied to the reading/writing combination head. However, an example not in accordance with the claimed invention is not limited to such a case and may be applied to a magnetic head for writing only. In other words, in such an example the magnetic head 4 may not include the reading coil 41c, the decoding circuit 42a, the encryption circuit 42b and the output terminal 43c.

In the first embodiment, there is shown the example in which the control signal of H level or L level is inputted to the switching circuit 42c. Specifically, the switching circuit 42c connects the writing coil 41d to the input terminals 43b electrically when the control signal of H level is inputted thereto, and disconnects the writing coil 41d from the input terminals 43b electrically when the control signal of L level is inputted thereto. However, the present invention is not limited to such a case. For example, a particular code may be inputted to the switching circuit 42c as the control signal. Specifically, the switching circuit 42c may connect the writing coil 41d to the input terminals 43b electrically when a predetermined code (e.g. HLLLH) is inputted thereto, and may disconnect the writing coil 41d from the input terminals 43b electrically when a predetermined code (e.g. HLHLH) is inputted thereto.

In the first embodiment, there is shown the example in which the control signal is switched to H level to connect the writing coil 41d to the input terminals 43b electrically only when writing to the magnetic card 160 is performed. However, in the present invention, at least when the data recorded on the magnetic card 160 is read and when the magnetic card 160 is conveyed, the writing coil 41d may be disconnected from the input terminals 43b electrically by switching the control signal to L level.

In the second embodiment, there is shown the example in which the notice of initiation of writing and the notice of termination of writing are inputted from the control unit 15. Alternatively, a notice of reading or a notice of conveying may be inputted from the control unit 15. In this case, the magnetic head controller 202e determines that reading of the magnetic card 160 is performed when the notice of reading is inputted, and determines that conveying of the magnetic card 160 is performed when the notice of conveying is inputted. Under such conditions, the switching circuit 202c disconnects the writing coil 41d from the input terminals 43b electrically.

In the second embodiment, there is shown the example in which the magnetic head controller 202e determines whether writing to the magnetic card 160 is performed or not, based on the notice of initiation of writing and the notice of termination of writing inputted to the communication terminal 203a. Alternatively, a detector which detects reading of the magnetic card 160 may be provided in the magnetic head 201, and the magnetic head controller 202e may determine whether reading of the magnetic card 160 is performed or not, based on a detection result of the detector.

In the second embodiment, there is shown the example in which the magnetic head controller 202e determines that writing to the magnetic card 160 is terminated when the termination of writing is notified. Alternatively, the magnetic head controller 202e may determine that writing to the magnetic card 160 is terminated when a predetermined time el apses after the initiation of writing is notified.

It should also be understood that although the foregoing description has been made on preferred embodiments, the invention is not limited thereto and various changes and modifications, for example, by combining features of the above-described embodiments, may be made without departing from the scope of the appended claims. Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

### Reference Signs List

- 1a: slot
- 2a, 2b, 2c, 2d: conveyance roller (conveyance means)
- 4, 201: magnetic head (data writing device)
- 15: control unit
- 41: reading/writing part (writing part, reading part)
- 42b, 202b: encryption circuit
- 42c, 202c: switching circuit (switching part)
- 43a: input terminal (second input part)
- 43b: input terminal (first input part)
- 43c: output terminal (output part)
- 100, 200: card processing apparatus
- 160: magnetic card
- 202e: magnetic head controller (determining means)
- 203a: communication terminal (output part)

## Claims

1. A data writing device (4) comprising a reading/writing part (41) that is adapted to write data into a magnetic card (160) and to read data recorded on the magnetic card (160), and an input part (43b) to which a writing signal to be supplied to the reading/writing part (41) can be inputted,
the data writing device (4) further comprises:
a switching part (42c) that is adapted to switch whether or not to connect the reading/writing part (41) to the input part (43b) electrically;
an encryption circuit (42b) that is adapted to encrypt the data read by the reading/writing part (41);
an output part (43c) that is adapted to output the data encrypted by the encryption circuit (42b);
a determining means (202e) that is adapted to determine whether writing to the magnetic card by the reading/writing part (41) is performed or not,
wherein the reading/writing part (41) includes a core (41b) provided with a winding portion around which a reading coil (41c) is wound up and a winding portion around which a writing coil (41d) is wound up, wherein the reading coil winding portion and the writing coil winding portion are separated by a gap (41a), and
wherein the switching part (42c) connects the reading/writing part (41) to the input part (43b) electrically only when the determining means (202e) determines that writing to the magnetic card (160) is performed,
**characterized in that**
the core (41b) is formed such that a width of the winding portion of the core (41b) around which the reading coil (41c) is wound up is smaller than a width of the winding portion of the core (41b) around which the writing coil (41d) is wound up, the width direction of both portions being parallel to a length direction of the gap (41a) along which the magnetic card (160) is fed for reading /writing,
wherein the shape of the core (41b) is as shown in Figure 4.

2. A card processing apparatus comprising:
a slot (1a) to which a magnetic card (160) is insertable;
a conveyance means (2a,2b,2c,2d) that is adapted to convey the magnetic card (160) inserted into the slot (1a); and
a data writing device (4) according to claim 1 that is adapted to write data into the magnetic card (160) being conveyed by the conveyance means (2a,2b,2c,2d).

3. A card processing apparatus according to claim 2,
wherein the core (41b) is formed such that a width for a winding portion of the reading coil (41c) is smaller than a width for a winding portion of the writing coil (41d).

## Patentansprüche

1. Datenschreibvorrichtung (4), die einen Lese-/Schreibteil (41), der ausgelegt ist, Daten in eine Magnetkarte (160) zu schreiben und auf der Magnetkarte (160) aufgezeichnete Daten zu lesen, und einen Eingabeteil (43b), in den ein Schreibsignal, das an den Lese-/Schreibteil (41) zu liefern ist, eingegeben werden kann, umfasst,
wobei die Datenschreibvorrichtung (4) ferner umfasst:
einen Schaltteil (42c), der ausgelegt ist, zu schalten, ob der Lese-/Schreibteil (41) mit dem Eingabeteil (43b) elektrisch zu verbinden ist oder nicht;
eine Verschlüsselungsschaltung (42b), die ausgelegt ist, die durch den Lese-/Schreibteil (41) gelesenen Daten zu verschlüsseln;
einen Ausgabeteil (43c), der ausgelegt ist, die durch die Verschlüsselungsschaltung (42b) verschlüsselten Daten auszugeben;
Bestimmungsmittel (202e), die ausgelegt sind, zu bestimmen, ob ein Schreiben auf die Magnetkarte durch den Lese-/Schreibteil (41) ausgeführt wird oder nicht,
wobei der Lese-/Schreibteil (41) einen Kern (41b) enthält, der mit einem Wicklungsabschnitt, um den eine Lesespule (41c) aufgewickelt ist, und einem Wicklungsabschnitt, um den eine Schreibspule (41d) aufgewickelt ist, ausgestattet ist, wobei der Wicklungsabschnitt der Lesespule und der Wicklungsabschnitt der Schreibspule durch einen Abstand (41a) getrennt sind, und
wobei der Schaltteil (42c) den Lese-/Schreibteil (41) mit dem Eingabeteil (43b) nur dann elektrisch verbindet, wenn die Bestimmungsmittel (202e) bestimmen, dass ein Schreiben auf die Magnetkarte (160) ausgeführt wird,
**dadurch gekennzeichnet, dass**
der Kern (41b) derart gebildet ist, dass eine Breite des Wicklungsabschnitts des Kerns (41b), um den die Lesespule (41c) aufgewickelt ist, kleiner als eine Breite des Wicklungsabschnitts des Kerns (41b), um den die Schreibspule (41d) aufgewickelt ist, ist, wobei die Richtung der Breite beider Abschnitte parallel zu einer Richtung der Länge des Abstands (41a) liegt, entlang der die Magnetkarte (160) zum Lesen/Schreiben eingeführt wird,
wobei die Form des Kerns (41b) wie in Figur 4 gezeigt ist.

2. Kartenverarbeitungsvorrichtung, die umfasst:
einen Schlitz (1a), in den eine Magnetkarte (160) eingeführt werden kann;
Fördermittel (2a, 2b, 2c, 2d), die ausgelegt sind, die in den Schlitz (1a) eingeführte Magnetkarte (160) zu befördern; und
eine Datenschreibvorrichtung (4) nach Anspruch 1, die ausgelegt ist, Daten in die Magnetkarte (160), die durch die Fördermittel (2a, 2b, 2c, 2d) befördert wird, zu schreiben.

3. Kartenverarbeitungsvorrichtung nach Anspruch 2,
wobei der Kern (41b) derart gebildet ist, dass eine Breite für einen Wicklungsabschnitt der Lesespule (41c) kleiner als eine Breite für einen Wicklungsabschnitt der Schreibspule (41d) ist.

## Revendications

1. Dispositif d'écriture de données (4) comprenant une partie de lecture/écriture (41) qui est adaptée à écrire des données dans une carte magnétique (160) et à lire des données enregistrées sur la carte magnétique (160), et une partie d'entrée (43b) à laquelle peut être entré un signal d'écriture destiné à être fourni à la partie de lecture/écriture (41),
le dispositif d'écriture de données (4) comprend en outre :
une partie de commutation (42c) qui est adaptée à commuter selon qu'il s'agit ou non de connecter électriquement la partie de lecture/écriture (41) à la partie d'entrée (43b) ;
un circuit de cryptage (42b) qui est adapté à crypter les données lues par la partie de lecture/écriture (41) ;
une partie de sortie (43c) qui est adaptée à délivrer les données cryptées par le circuit de cryptage (42b) ;
un moyen de détermination (202e) qui est adapté à déterminer si une écriture sur la carte magnétique par la partie de lecture/écriture (41) est exécutée ou non,
dans lequel la partie de lecture/écriture (41) inclut un coeur (41 b) doté d'une portion d'enroulement autour de laquelle un bobinage de lecture (41 c) est enroulé, et une portion d'enroulement autour de laquelle un bobinage d'écriture (41d) est enroulé, dans lequel la portion d'enroulement du bobinage de lecture et la portion d'enroulement du bobinage d'écriture sont séparées par un intervalle (41 a), et
dans lequel la partie de commutation (42c) connecte la partie de lecture/écriture (41) avec la partie d'entrée (43b) de manière électrique uniquement quand le moyen de détermination (202e) détermine que l'écriture sur la carte magnétique (160) est effectué,
**caractérisé en ce que**
le coeur (41b) est formé de telle façon qu'une largeur de la portion d'enroulement du coeur (41b) autour de laquelle le bobinage de lecture (41 c) est enroulé est plus petite qu'une largeur de la portion d'enroulement du coeur (41b) autour de laquelle le bobinage d'écriture (41b) est enroulé, la direction en largeur des deux portions étant parallèle à une direction en longueur de l'intervalle (41a) le long duquel la carte magnétique (160) est alimentée pour la lecture/écriture,
dans lequel la forme du coeur (41 b) est telle que montrée dans la figure 4.

2. Appareil de traitement de cartes, comprenant :
une fente (1a) dans laquelle une carte magnétique (160) peut être insérée ;
un moyen de convoyage (2a, 2b, 2c, 2d) qui est adapté à convoyer la carte magnétique (160) insérée dans la fente (a) ; et
un dispositif d'écriture de données (4) selon la revendication 1 qui est adapté à créer des données dans la carte magnétique (160) qui est convoyée par le moyen de convoyage (2a, 2b, 2c, 2d).

3. Appareil de traitement de cartes selon la revendication 2,
dans lequel le coeur (41b) est formé de telle façon qu'une largeur pour une portion d'enroulement de la bobine de lecture (41c) est plus petite qu'une largeur pour une portion d'enroulement de la bobine d'écriture (41d).
